# EUROPÄISCHE PATENTSCHRIFT

(11) **EP 1 764 584 B1**
(45) Veröffentlichungstag und Bekanntmachung des Hinweises auf die Patenterteilung: **15.09.2010**
(21) Anmeldenummer: 06013679.3
(22) Anmeldetag: 01.07.2006
(51) Int. Cl.: G01D 5/244, G01D 5/347, G01B 3/00

(54) **Befestigung eines Trägers einer Massverkörperung**
Mounting a carrier of a graduation scale
Montage d'un support d'une échelle de graduation

(30) Priorität: 14.09.2005 DE 102005044000
(43) Veröffentlichungstag der Anmeldung: 21.03.2007
(73) Patentinhaber: Dr. Johannes Heidenhain GmbH, 83301 Traunreut (DE)
(72) Erfinder: Haunreiter, Johannes, 84489 Burghausen (DE); Affa, Alfred, 83371 Stein/Traun (DE)

(56) Entgegenhaltungen:
- US-A- 4 509 262
- US-A- 4 608 758
- US-A- 6 163 970

## Beschreibung

Die Erfindung betrifft eine Anordnung zum Befestigen eines Trägers einer Maßverkörperung nach dem Oberbegriff des Anspruchs 1 sowie ein Verfahren zum Befestigen des Trägers nach dem Oberbegriff des Anspruchs 9 und eine Längenmesseinrichtung nach dem Anspruch 12.

Längenmesseinrichtungen bestehen aus einem Träger einer Maßverkörperung und einer die Maßverkörperung abtastende Abtasteinheit. Sie werden insbesondere bei Bearbeitungsmaschinen zur Messung der Relativbewegung eines Werkzeugs bezüglich eines zu bearbeitenden Werkstücks, bei Robotern, Koordinatenmessmaschinen und vermehrt auch in der Halbleiterindustrie eingesetzt.

In der DE 83 02 162 U1 ist eine Anordnung zur Befestigung eines Trägers einer Maßverkörperung beschrieben. Die Anordnung weist eine Spannpratze auf, die das Gehäuse einer Längenmesseinrichtung an eine Montagefläche eines der zu messenden Objekte drängt. Die Spannpratze wird mittels einer Schraube am zu messenden Objekt befestigt, wobei die Spannpratze mit einer geneigten Spannfläche des Gehäuses zusammenwirkt. Die Spannpratze wird dadurch mittels der Schraube mit einer Kraftkomponente an die Montagefläche gedrängt und mit einer zweiten Kraftkomponente an eine quer zur Montagefläche verlaufende Anschlagfläche gedrängt. Diese Anschlagfläche ist ein Vorsprung der Spannpratze selbst.

Beim Einschrauben der Schraube übt die Spannpratze eine Spannkraft auf das Gehäuse aus. Dabei verlagert sich die Spannpratze und somit auch die daran angeformte Anschlagfläche. Dadurch bildet diese Anschlagfläche keine definierte und stabile Positionier- und Ausrichthilfe für das Gehäuse.

Der Erfindung liegt die Aufgabe zugrunde, eine Anordnung zum Befestigen eines Trägers einer Maßverkörperung anzugeben, mit welcher der Träger auf einfache Weise an einer Montagefläche befestigt werden kann und die eine eindeutige Positionierung und Ausrichtung des Trägers ermöglicht.

Diese Aufgabe wird erfindungsgemäß durch die Merkmale des Anspruchs 1 gelöst.

Die DE 83 02 162 U1 beschreibt auch ein Verfahren zum Befestigen eines Trägers einer Maßverkörperung an einer Montagefläche. Dabei wird eine Spannpratze durch Eindrehen einer Schraube in das zu messende Objekt an eine Spannfläche des Gehäuses einer Längenmesseinrichtung gedrängt. Dadurch wird auf das Gehäuse eine Spannkraft ausgeübt, die das Gehäuse an die Montagefläche und an eine Anschlagfläche der Spannpratze drängt. Nach der Befestigung der Spannpratze am zu messenden Objekt wird die Spannpratze mittels Verstiften formschlüssig am zu messenden Objekt fixiert.

Da die formschlüssige Fixierung erst nach dem Generieren der Spannkraft erfolgt, kann eine Verlagerung der Anschlagfläche während der Befestigung nicht verhindert werden.

Mit der Erfindung soll nun auch ein Verfahren angegeben werden, mit dem auf einfache Weise ein Träger einer Maßverkörperung an einer Montagefläche befestigt werden kann und mit dem eine eindeutige Positionierung und Ausrichtung des Trägers ermöglicht wird.

Diese Aufgabe wird durch die Merkmale des Anspruchs 9 gelöst.

Weiterhin soll eine Längenmesseinrichtung angegeben werden, die einfach befestigbar ist und eindeutig positioniert werden kann.

Diese Aufgabe wird durch die Merkmale des Anspruchs 12 gelöst.

Die mit der Erfindung erzielten Vorteile bestehen darin, dass die Lage der Anschlagfläche in einer Richtung quer zur Montagefläche durch Verlagerung der Spannpratze selbst möglichst unbeeinflusst bleibt. Da die Anschlagfläche unmittelbar vom im zu messenden Objekt formschlüssig verankerten Anschlagkörper selbst gebildet wird und dieser Anschlagkörper in einer Passaufnahme des zu messenden Objektes stabil fixiert ist, ist die Positionierung und Ausrichtung des Trägers eindeutig durch die Lage der von dem Anschlagkörper gebildeten Anschlagfläche vorgegeben. Es ist auch eine einfache Handhabung realisierbar, da der Anschlagkörper den Halter für die Spannpratze bildet und die Spannpratze bei der Montage in Längsrichtung des Anschlagkörpers verlagerbar ist.

In den abhängigen Ansprüchen sind vorteilhafte Ausgestaltungen der Erfindung angegeben.

Die Erfindung wird anhand von Ausführungsbeispielen näher erläutert.

Dabei zeigt
- Figur 1: eine Längenmesseinrichtung mit einer erfindungsgemäß ausgebildeten Anordnung;
- Figur 2: einen Querschnitt II-II der Längenmesseinrichtung gemäß Figur 1 ohne Abtasteinheit;
- Figur 3: einen Verfahrensschritt zum Befestigen des Gehäuses der Längenmesseinrichtung gemäß Figur 2;
- Figur 4: einen weiteren Verfahrensschritt;
- Figur 5: die Endmontage des Gehäuses;
- Figur 6: einen Querschnitt eines zweiten Ausführungsbeispiels;
- Figur 7: einen Querschnitt eines dritten Ausführungsbeispiels;
- Figur 8: einen Querschnitt eines vierten Ausführungsbeispiels;
- Figur 9: einen Querschnitt eines fünften Ausführungsbeispiels;
- Figur 10: einen Querschnitt eines sechsten Ausführungsbeispiels;
- Figur 11: einen Querschnitt eines siebten Ausführungsbeispiels und
- Figur 12: einen Querschnitt eines achten Ausführungsbeispiels.

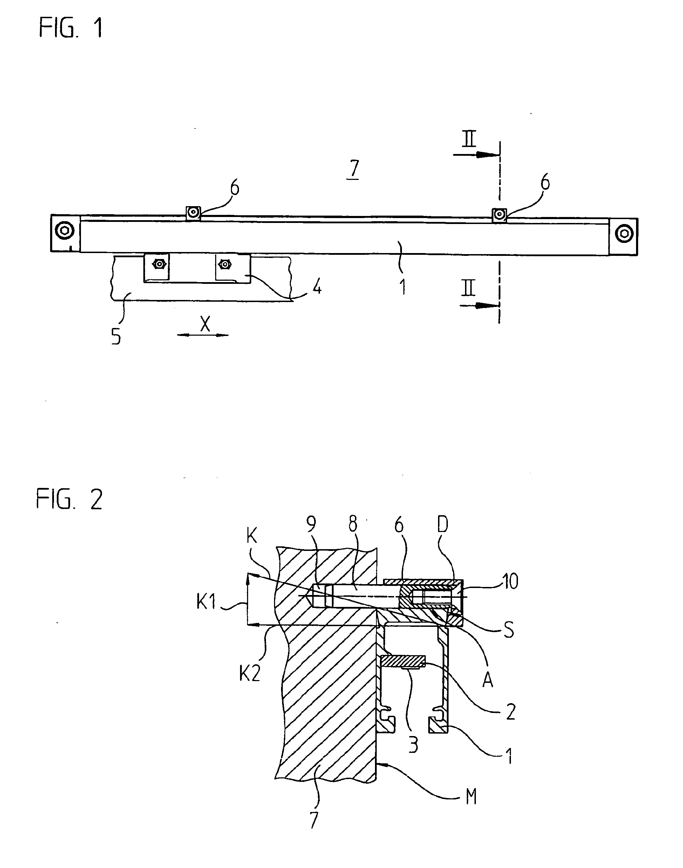

In den Figuren 1 bis 5 ist ein erstes Ausführungsbeispiel der Erfindung dargestellt. Figur 1 zeigt eine Ansicht einer gekapselten Längenmesseinrichtung mit einem Gehäuse 1 in Form eines Hohlprofils, in dessen Inneren ein Maßstab 2 befestigt ist. Der Maßstab 2 trägt eine Messteilung 3, die von einer relativ zum Maßstab 1 in Messrichtung X bewegbaren Abtasteinheit abtastbar ist. Die Abtasteinheit ist mittels eines Mitnehmers 4 mit einem der zu messenden Objekte 5 verbunden. Dieses Objekt 5 ist beispielsweise das Bett einer Werkzeugmaschine.

Das Gehäuse 1 als Träger des die Messteilung 3 aufweisenden Maßstabs 2 ist mittels wenigstens einer Spannpratze 6 auf einer Montagefläche M des anderen der zu messenden Objekte 7 befestigt. Dieses Objekt 7 ist beispielsweise der Schlitten einer Werkzeugmaschine.

Die Spannpratze 6 ist derart ausgebildet, dass die auf das Gehäuse 1 wirkende Spannkraft K der Spannpratze 6 in zwei zueinander senkrechte Kraftkomponenten K1 und K2 in einer zur Längserstreckung des Gehäuses 1 senkrechten Ebene - also in der Schnittebene II-II - zerlegt wird. Dazu ist die mit der Spannpratze 6 korrespondierende Spannfläche S des Gehäuses 1 relativ zur Montagefläche M geneigt. Die Spannpratze 6 drängt das Gehäuse 1 mit einer Kraftkomponente K2 an die Montagefläche M und mit der weiteren Kraftkomponente K1 unmittelbar an eine Anschlagfläche A eines Anschlagkörpers 8.

Der Anschlagkörper ist in diesem Ausführungsbeispiel ein Passstift 8, der formschlüssig und spielfrei in einer Aufnahme in Form einer Passbohrung 9 am ersten der zu messenden Objekte 7 fixiert ist. Der Passstift 8 bildet mit der Passbohrung 9 eine Presspassung.

Die Länge des Passstiftes 8 ist vorzugsweise derart gewählt, dass das Gehäuse 1 über seine gesamte Breite am Passstift 8 anliegt.

Die Spannpratze 6 weist eine Durchgangsbohrung D auf, mit der sie in Längsrichtung des Passstiftes 8 an diesem geführt ist. Zum Aufbringen der Spannkraft K ist ein kraftausübendes Element in Form einer Schraube 10 in den Passstift 8 eingeschraubt. Mit dieser Schraube 10 wird die Spannpratze 6 in Längsrichtung des Passstiftes 8 an diesem verlagert.

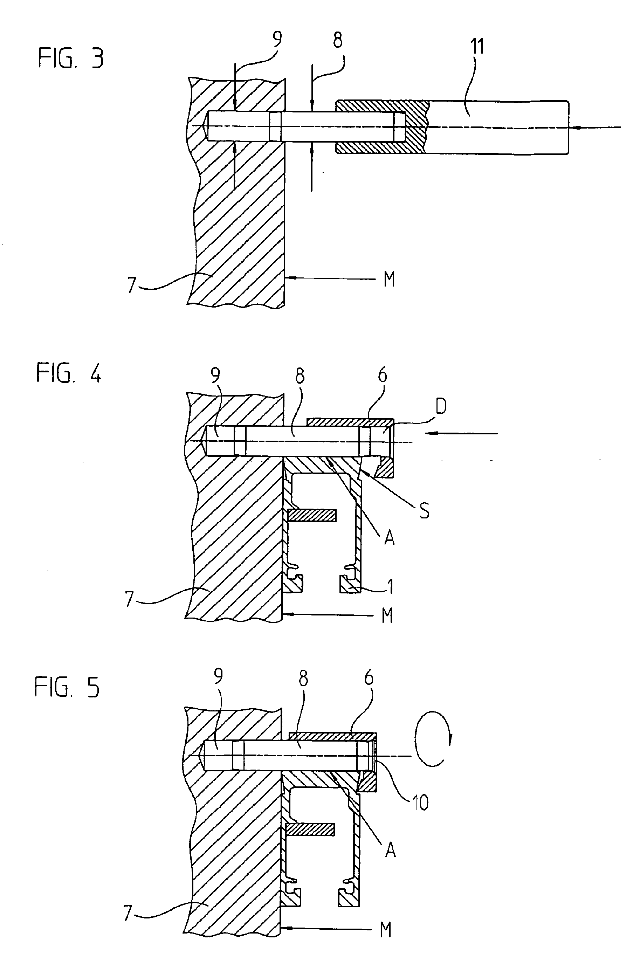

Die Figuren 3 bis 5 zeigen die einzelnen Verfahrensschritte zum Befestigen des Gehäuses 1 an der Montagefläche M des zu messenden Objekts 7. Im ersten Verfahrensschritt wird die Passbohrung 9 in das Objekt 7 eingebracht und der Passstift 8 eingepresst. In Figur 3 ist ein dazu verwendetes Einpresswerkzeug 11 schematisch dargestellt.

Der Passstift 8 bildet die Anschlagfläche A zum Anschlagen des Gehäuse 1. Nach dem Anschlagen des Gehäuses 1 an den Passstift 8 wird die Spannpratze 6 mit der Spannfläche S des Gehäuses 1 in Kontakt gebracht, wie in Figur 4 dargestellt ist. Dabei wird die Spannpratze 6 mit ihrer Durchgangsbohrung D auf den Passstift 8 geschoben.

Nun wird gemäß Figur 5 die Schraube 10 in ein Innengewinde des Passstiftes 8 eingeschraubt und damit die Spannkraft K generiert. Die Spannpratze 6 wird dabei relativ zum Passstift 8 in Längsrichtung verlagert und wird daran geführt, ohne dass sich aber dabei die Lage der Anschlagfläche A für das Gehäuse 1 verlagert. Die durch den Passstift 8 vorgegebene Ausrichtung des Gehäuses 1 bleibt dabei erhalten.

Die Erfindung ist besonders vorteilhaft auch bei relativ langen Gehäusen 1 einsetzbar, bei denen zur stabilen Befestigung mehrere Spannpratzen 6 eingesetzt werden müssen. Hier werden zuerst alle Passstifte 8 in einer Linie in das Objekt 7 eingebracht und dann das Gehäuse 1 daran angeschlagen und dadurch ausgerichtet. Danach werden die Spannpratzen 6 mit dem Gehäuse 1 in Eingriff gebracht und jeweils die zur unverrückbaren Befestigung des Gehäuses 1 erforderliche Spannkraft K aufgebracht. Bei dem Ausführungsbeispiel gemäß Figur 1 dienen beispielsweise zwei in Messrichtung X voneinander beabstandete Spannpratzen 6 zum Ausrichten und stabilen Befestigen des Gehäuses 1.

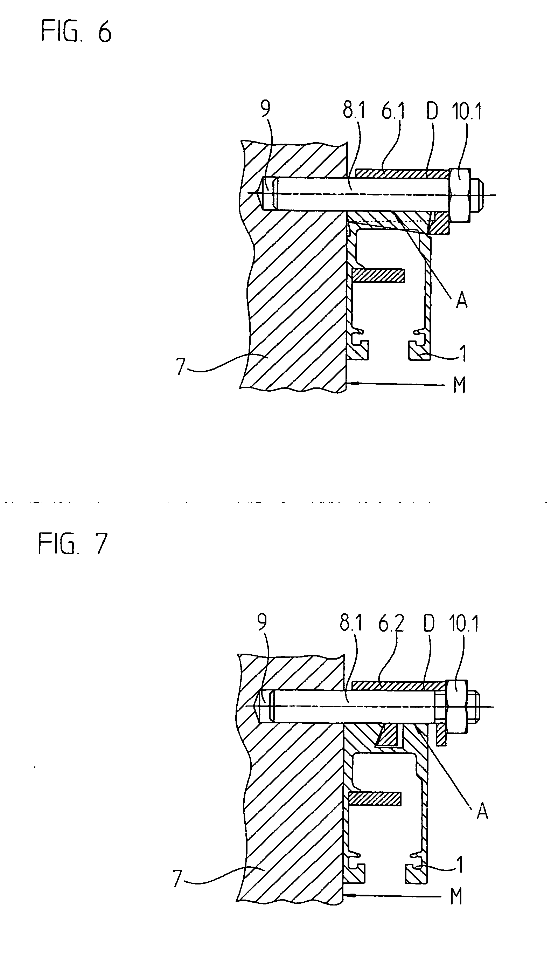

Der Aufbau der nachfolgend anhand der Figuren 6 bis 11 erläuterten Längenmesseinrichtungen entspricht weitgehend dem des ersten Ausführungsbeispiels. Auch die Anordnung und das Verfahren zum Befestigen entspricht dem oben erläuterten Beispiel, so dass nachfolgend nur die Unterschiede zum ersten Ausführungsbeispiel erläutert werden.

Bei dem Ausführungsbeispiel gemäß Figur 6 ist die Schraube 10 ersetzt durch eine Mutter 10.1, die auf ein Außengewinde des Passstiftes 8.1 aufgeschraubt ist und die Spannpratze 6.1 in Längsrichtung des Passstiftes 8.1 verlagert.

Das in Figur 7 dargestellte Ausführungsbeispiel entspricht dem gemäß Figur 6, nur dass nun die Spannfläche S in einer Nut des Gehäuses 1 angeordnet ist und die Spannpratze 6.2 in der Nut mit dem Gehäuse 1 zusammenwirkt.

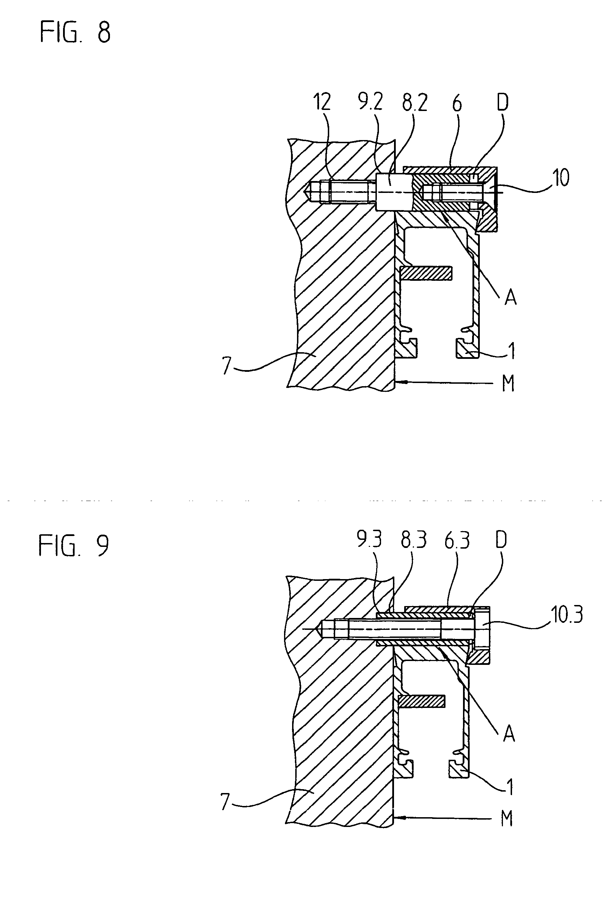

Bei dem vierten Ausführungsbeispiel gemäß Figur 8 ist der Anschlagkörper ein Passstift 8.2 mit einem Passungsbereich zur Ausbildung einer Passung zur Zentrierung in der Passbohrung 9.2 am Objekt 7 und einem Gewindeansatz 12 zum Einschrauben des Passstiftes 8.2 in das Objekt 7.

Wie Figur 9 zeigt, kann die Funktion der Anschlagfläche A auch eine Passhülse 8.3 übernehmen, die in eine Passbohrung 9.3 spielfrei aufgenommen ist. Die Spannpratze 6.3 kann nun durch eine in die Passhülse 8.3 eingeschraubte oder aufgeschraubte Schraube oder Mutter befestigt werden, oder wie in Figur 9 dargestellt ist, durch eine Schraube 10.3, die in das Objekt 7 eingeschraubt ist.

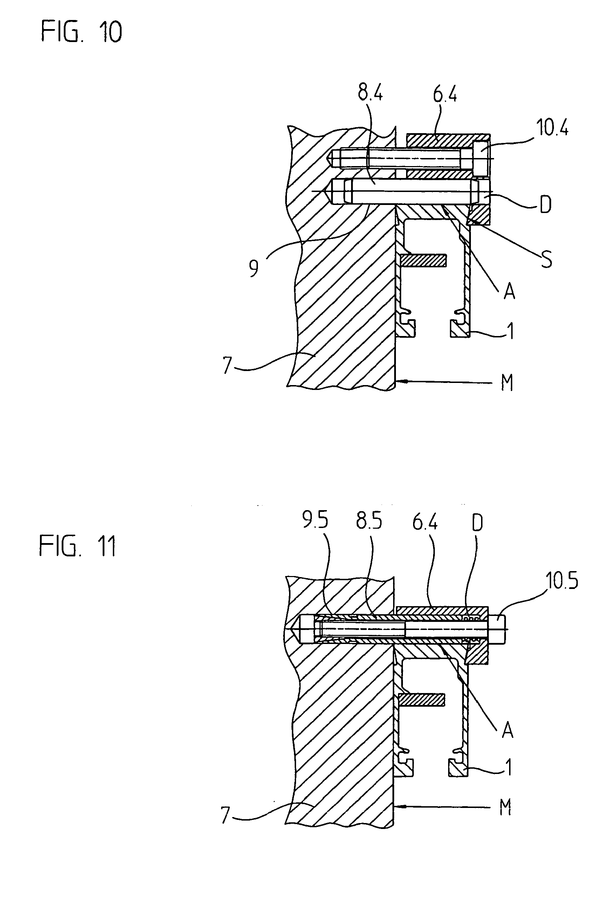

Bei dem sechsten Ausführungsbeispiel gemäß Figur 10 erfüllt der Passstift 8.4 die gleichen Funktionen wie beim ersten Ausführungsbeispiel, mit dem Unterschied, dass die Spannpratze 6.4 mittels einer neben dem Passstift 8.4 eingeschraubten Schraube 10.4 an die Spannfläche S gedrängt wird.

Das siebte anhand der Figur 11 erläuterte Ausführungsbeispiel entspricht weitgehend dem Ausführungsbeispiel gemäß Figur 9, nur dass die Passhülse 8.3 durch einen Dübel 8.5 ersetzt ist. Der dargestellte Dübel 8.5 ist ein Schraubdübel, bei dem die stabile Verankerung in Form einer Klemmung in der Bohrung 9.5 gleichzeitig durch das Aufbringen der Spannkraft der Spannpratze 6.5 mittels der Schraube 10.5 erzielt wird. Dabei verpressen bzw. verkeilen sich Teile des Dübels 8.5 in der Bohrung 9.5. In nicht gezeigter Weise kann anstelle des Schraubdübels auch ein Einschlagdübel verwendet werden.

Als Träger der Messteilung bzw. Maßverkörperung 3 kann anstelle des Gehäuses 1 auch der Maßstab 2 selbst mit den oben beschriebenen Anordnungen an der Montagefläche M befestigt werden. Die Spannfläche ist dann direkt am Maßstab angeordnet, und die Spannpratze wirkt direkt mit dem Maßstab zusammen und drängt diesen an die Montagefläche sowie an den Anschlagkörper.

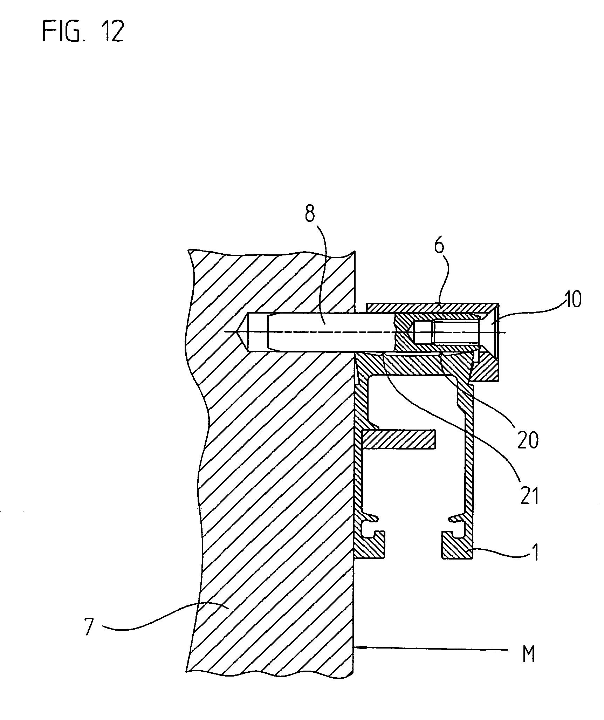

Anhand des in Figur 12 dargestellten achten Ausführungsbeispiels wird eine vorteilhafte Ausgestaltung des Gehäuses 1 erläutert. Die dem Anschlagkörper 8 gegenüberliegende Fläche des Gehäuses 1 weist zwei voneinander beabstandete Vorsprünge 20, 21 auf, die den Anschlagkörper 8 definiert an zwei voneinander beabstandeten Stellen kontaktieren. Konvexe oder konkave Wölbungen des Gehäuses 1 in Richtung des Abstandes der beiden Vorsprünge 20, 21 beeinflussen somit die Anlage am Anschlagkörper 8 nicht. Die Vorsprünge 20, 21 sind vorzugsweise in Messrichtung X verlaufende Stege, die auch abschnittsweise unterbrochen ausgebildet sein können. Diese Ausgestaltung des Gehäuses 1 kann bei allen oben beschriebenen Beispielen zum Einsatz kommen.

## Patentansprüche

1. Anordnung zum Befestigen eines Trägers (1) einer Maßverkörperung (3) einer Längenmesseinrichtung an einer Montagefläche (M) eines zu messenden Objektes (7), umfassend zumindest eine Spannpratze (6, 6.1, 6.2, 6.3, 6.4, 6.5) und ein die Spannpratze (6, 6.1, 6.2, 6.3, 6.4, 6.5) an den Träger (1) drängendes kraftausübendes Element (10, 10.1, 10.3, 10.4, 10.5), wobei die Spannpratze (6, 6.1, 6.2, 6.3, 6.4, 6.5) mit dem Träger (1) dabei derart zusammenwirkt, dass die Spannpratze (6, 6.1, 6.2, 6.3, 6.4, 6.5) mittels des kraftausübenden Elementes (10, 10.1, 10.3, 10.4, 10.5) den Träger (1) mit einer Kraftkomponente (K2) an die Montagefläche (M) drängt und mit einer zweiten Kraftkomponente (K1) an eine quer zur Montagefläche (M) verlaufende Anschlagfläche (A) drängt, **dadurch gekennzeichnet, dass** die Anschlagfläche (A) unmittelbar von einem Anschlagkörper (8, 8.1, 8.2, 8.3, 8.4, 8.5) gebildet wird, der formschlüssig und spielfrei in einer Aufnahme (9, 9.2, 9.3, 9.5) am ersten Objekt (7) fixierbar ist.

2. Anordnung nach Anspruch 1, **dadurch gekennzeichnet, dass** die Spannpratze (6, 6.1, 6.2, 6.3, 6.4, 6.5) zum Generieren der Spannkraft (K) am Anschlagkörper (8, 8.1, 8.2, 8.3, 8.4, 8.5) verlagerbar ist

3. Anordnung nach Anspruch 2, **dadurch gekennzeichnet, dass** die Spannpratze (6, 6.1, 6.2, 6.3, 6.4, 6.5) eine Durchgangsbohrung (D) zur Führung der Spannpratze (6, 6.1, 6.2, 6.3, 6.4, 6.5) entlang des Anschlagkörpers (8, 8.1, 8.2, 8.3, 8.4, 8.5) aufweist.

4. Anordnung nach einem der vorhergehenden Ansprüche, **dadurch gekennzeichnet, dass** das kraftausübende Element eine Schraube (10) oder eine Mutter (10.1) ist, die mit einem Gewinde des Anschlagkörpers (8, 8.1, 8.2) zusammenwirkt.

5. Anordnung nach einem der Ansprüche 1 bis 3, **dadurch gekennzeichnet, dass** das kraftausübende Element eine Schraube (10.3, 10.4) ist, die in das zu messende Objekt (7) einschraubbar ist.

6. Anordnung nach einem der vorhergehenden Ansprüche, **dadurch gekennzeichnet, dass** der Anschlagkörper ein Passstift (8, 8.1, 8.2, 8.4) oder eine Passhülse (8.3, 8.5) ist.

7. Anordnung nach einem der vorhergehenden Ansprüche, **dadurch gekennzeichnet, dass** der Träger (1) eine zur Montagefläche (M) geneigte Spannfläche (S) aufweist, an der die Spannpratze (6, 6.1, 6.2, 6.3, 6.4, 6.5) angreift.

8. Anordnung nach einem der vorhergehenden Ansprüche, **dadurch gekennzeichnet, dass** der Träger (1) zwei voneinander beabstandete und in Messrichtung (X) verlaufende stegförmige Vorsprünge (20, 21) aufweist, die den Anschlagkörper (8, 8.1, 8.2, 8.3, 8.4, 8.5) kontaktieren.

9. Verfahren zum Befestigen eines Trägers (1) einer Maßverkörperung (3) einer Längenmesseinrichtung an einer Montagefläche (M) eines zu messenden Objekts (7), mit zumindest einer Spannpratze (6, 6.1, 6.2, 6.3, 6.4, 6.5) und einem die Spannpratze (6, 6.1, 6.2, 6.3, 6.4, 6.5) an den Träger (1) drängenden kraftausübenden Element (10, 10.1, 10.3, 10.4, 10.5), wobei die Spannpratze (6, 6.1, 6.2, 6.3, 6.4, 6.5) mit dem Träger (1) dabei derart zusammenwirkt, dass die Spannpratze (6, 6.1, 6.2, 6.3, 6.4, 6.5) mittels des kraftausübenden Elementes (10, 10.1, 10.3, 10.4, 10.5) den Träger (1) mit einer Kraftkomponente (K2) an die Montagefläche (M) drängt und mit einer zweiten Kraftkomponente (K1) an eine quer zur Montagefläche (M) verlaufende Anschlagfläche (A) drängt, **dadurch gekennzeichnet, dass**
- ein Anschlagkörper (8, 8.1, 8.2, 8.3, 8.4, 8.5) formschlüssig und spielfrei in einer Aufnahme (9, 9.2, 9.3, 9.5) am ersten Objekt fixiert wird;
- die Anschlagfläche (A) vom Anschlagkörper (8, 8.1, 8.2, 8.3, 8.4, 8.5) gebildet wird und der Träger (1) unmittelbar an die Anschlagfläche (A) des Anschlagkörpers (8, 8.1, 8.2, 8.3, 8.4, 8.5) angeschlagen wird und
- die Spannpratze (6, 6.1, 6.2, 6.3, 6.4, 6.5) mit dem Träger (1) in Kontakt gebracht wird und diesen an die Anschlagfläche (A) des Anschlagkörpers (8, 8.1, 8.2, 8.3, 8.4, 8.5) drängt.

10. Verfahren nach Anspruch 9, **dadurch gekennzeichnet, dass** die Fixierung des Anschlagkörpers (8, 8.1, 8.2, 8.3, 8.4, 8.5) durch Einschlagen des Anschlagkörpers (8, 8.1, 8.2, 8.3, 8.4, 8.5) in eine Passbohrung (9, 9.2, 9.3, 9.5) im ersten Objekt (7) erfolgt.

11. Verfahren nach Anspruch 9 oder 10, **dadurch gekennzeichnet, dass** die Spannpratze (6, 6.1, 6.2, 6.3, 6.4, 6.5) am und entlang des Anschlagkörpers (8, 8.1, 8.2, 8.3, 8.4, 8.5) geführt wird.

12. Längenmesseinrichtung mit einem Träger (1) einer Maßverkörperung (3) und mit einer Anordnung nach einem der vorhergehenden Ansprüche 1 bis 7 zum Befestigen des Trägers (1) an einer Montagefläche (M) eines zu messenden Objektes (7).

## Claims

1. An arrangement for securing a support (1) of a material measure (3) of a length measuring device to a mounting surface (M) of an object (7), which is to be measured, comprising at least one clamping claw (6, 6.1, 6.2, 6.3, 6.4, 6.5) and a force-exerting element (10, 10.1, 10.3, 10.4, 10.5), which pushes the clamping claw (6, 6.1, 6.2, 6.3, 6.4, 6.5) against the support (1), wherein the clamping claw (6. 6.1, 6.2, 6.3, 6.4, 6.5) thereby interacts with the support (1) such that the clamping claw (6, 6.1, 6.2, 6.3, 6.4, 6.5) pushes the support (1) against the mounting surface (M) by means of the force-exerting element (10, 10.1, 10.3, 10.4, 10.5) with a force component (K2) and against a stop surface (A), which runs at right angles to the mounting surface (M) with a second force component (K2), **characterized in that** the stop surface (A) is formed directly by a stop body (8, 8.1, 8.2, 8.3, 8.4, 8.5), which can be fixed in an accommodation (9, 9.2, 9.3, 9.5) on the first object (7) in a positive manner and free of play.

2. The arrangement according to claim 1, **characterized in that** the clamping claw (6, 6.1, 6.2, 6.3, 6.4, 6.5) can be displaced for generating a clamping force (K) on the stop body (8, 8.1, 8.2, 8.3, 8.4, 8.5).

3. The arrangement according to claim 2, **characterized in that** the clamping claw (6, 6.1, 6.2, 6.3, 6.4, 6.5) encompasses a through hole (D) for guiding the clamping claw (6, 6.1, 6.2, 6.3, 6.4, 6.5) along the stop body (8, 8.1, 8.2, 8.3, 8.4, 8.5).

4. The arrangement according to one of the preceding claims, **characterized in that** the force-exerting element is a screw (10) or a screw nut (10.1), which interacts with a screw thread of the stop body (8, 8.1, 8.2).

5. The arrangement according to one of claims 1 to 3, **characterized in that** the force-exerting element is a screw (10.3, 10.4), which can be screwed into the object (7), which is to be measured.

6. The arrangement according to one of the preceding claims, **characterized in that** the stop body is a fixing pin (8, 8.1, 8.2, 8.4) or a fixing sleeve (8.3, 8.5).

7. The arrangement according to one of the preceding claims, **characterized in that** the support (1) encompasses a clamping surface (S), which is inclined towards the mounting surface (M) and with which the clamping claw (6, 6.1, 6.2, 6.3, 6.4, 6.5) engages.

8. The arrangement according to one of the preceding claims, **characterized in that** the support (1) encompasses two bar-shaped projections (20, 21), which are spaced apart from one another and which run in measuring direction (X), which contact the stop body (8, 8.1, 8.2, 8.3, 8.4, 8.5).

9. A method for securing a support (1) of a material measure (3) of a length measuring device to a mounting surface (M) of an object (7), which is to be measured, comprising at least one clamping claw (6, 6.1, 6.2, 6.3, 6.4, 6.5) and a force-exerting element (10, 10.1, 10.3, 10.4, 10.5), which pushes the clamping claw (6, 6.1, 6.2, 6.3, 6.4, 6.5) against the support (1), wherein the clamping claw (6, 6.1, 6.2, 6.3, 6.4, 6.5) thereby interacts with the support (1) such that the clamping claw (6, 6.1, 6.2, 6.3, 6.4, 6.5) pushes the support (1) against the mounting surface (M) by means of the force-exerting element (10, 10.1, 10.3, 10.4, 10.5) with a force component (K2) and against a stop surface (A), which runs at right angles to the mounting surface (M) with a second force component (K2), **characterized in that**
- a stop body (8, 8.1, 8.2, 8.3, 8.4, 8.5) is fixed in an accommodation (9, 9.2, 9.3, 9.5) on the first object (7) in a positive manner and free of play;
- the stop surface (A) is formed by the stop body (8, 8.1, 8.2, 8.3, 8.4, 8.5) and the support (1) directly hits the stop surface (A) of the stop body (8, 8.1, 8.2, 8.3, 8.4, 8.5) and
- the clamping claw (6, 6.1, 6.2, 6.3, 6.4, 6.5) is brought into contact with the support (1) and pushes said support (1) against the stop surface (A) of the stop body (8, 8.1, 8.2, 8.3, 8.4, 8.5).

10. The method according to claim 9, **characterized in that** the fixation of the stop body (8, 8.1, 8.2, 8.3, 8.4, 8.5) takes place by banging the stop body (8, 8.1, 8.2, 8.3, 8.4, 8.5) into a clearance hole (9, 9.2, 9.3, 9.5) in the first object (7).

11. The method according to claim 9 or 10, **characterized in that** the clamping claw (6, 6.1, 6.2, 6.3, 6.4, 6.5) is guided on and along the stop body (8, 8.1, 8.2, 8.3, 8.4, 8.5).

12. A length measuring device comprising a support (1) of a material measure (3) and comprising an arrangement according to one of the preceding claims 1 to 7 for securing the support (1) to a mounting surface (M) of an object (7), which is to be measured.

## Revendications

1. Dispositif pour la fixation d'un support (2) d'une mesure matérialisée (3) d'un dispositif de mesure de longueur sur une surface de montage (M) d'un objet à mesurer (7), comprenant au moins une patte de serrage (6, 6.1, 6.2, 6.3, 6.4, 6.5) et un élément exerçant une force (10, 10.1, 10.3, 10.4, 10.5) poussant la patte de serrage (6, 6.1, 6.2, 6.3, 6.4, 6.5) contre le support (1), dans lequel la patte de serrage (6, 6.1, 6.2, 6.3, 6.4, 6.5) coopère de telle manière avec le support (1), que la patte de serrage (6, 6.1, 6.2, 6.3, 6.4, 6.5) pousse le support (1) contre la surface de montage (M) avec une composante de force (K2) au moyen de l'élément exerçant une force (10, 10.1, 10.3, 10.4, 10.5), et contre une surface de butée (A) s'étendant perpendiculairement à la surface de montage (M) avec une deuxième composante de force (K1), **caractérisé en ce que** la surface de butée (A) est formée directement par un corps de butée (8, 8.1, 8.2, 8.3, 8.4, 8.5) susceptible d'être fixé par complémentarité de forme et sans jeu dans une admission (9, 9.2, 9.3, 9.5) sur le premier objet (7).

2. Dispositif selon la revendication 1, **caractérisé en ce que** la patte de serrage (6, 6.1, 6.2, 6.3, 6.4, 6.5) peut être déplacée sur le corps de butée (8, 8.1, 8.2, 8.3, 8.4, 8.5) pour générer la force de serrage (K).

3. Dispositif selon la revendication 2, **caractérisé en ce que** la patte de serrage (6, 6.1, 6.2, 6.3, 6.4, 6.5) comporte un perçage traversant (D) pour le guidage de la patte de serrage (6, 6.1, 6.2, 6.3, 6.4, 6.5) le long du corps de butée (8, 8.1, 8.2, 8.3, 8.4, 8.5).

4. Dispositif selon l'une des revendications précédentes, **caractérisé en ce que** l'élément exerçant une force est une vis (10) ou un écrou (10.1) coopérant avec un filetage du corps de butée (8, 8.1, 8.2).

5. Dispositif selon l'une des revendications 1 à 3, **caractérisé en ce que** l'élément exerçant une force est une vis (10.3, 10.4), susceptible d'être vissée dans l'objet à mesurer (7).

6. Dispositif selon l'une des revendications précédentes, **caractérisé en ce que** le corps de butée est une goupille de position (8, 8.1, 8.2, 8.4) ou un goujon (8.3, 8.5).

7. Dispositif selon l'une des revendications précédentes, **caractérisé en ce que** le support (1) comporte une surface de serrage (S) inclinée vers la surface de montage (M), sur laquelle s'appliquent les pattes de serrage (6, 6.1, 6.2, 6.3, 6.4, 6.5).

8. Dispositif selon l'une des revendications précédentes, **caractérisé en ce que** le support (1) comporte deux saillies (20, 21) en forme de d'âme, espacées l'une de l'autre, s'étendant dans le sens de mesurage (X) et touchant le corps de butée (8, 8.1, 8.2, 8.3, 8.4, 8.5).

9. Procédé pour la fixation d'un support (1) d'une mesure matérialisée (3) d'un dispositif de mesure de longueur sur une surface de montage (M) d'un objet à mesurer (7), avec au moins une patte de serrage (6, 6.1, 6.2, 6.3, 6.4, 6.5) et un élément exerçant une force (10, 10.1, 10.3, 10.4, 10.5) poussant la patte de serrage (6, 6.1, 6.2, 6.3, 6.4, 6.5) contre le support (1), dans lequel la patte de serrage (6, 6.1, 6.2, 6.3, 6.4, 6.5) coopère de telle manière avec le support (1), que la patte de serrage (6, 6.1, 6.2, 6.3, 6.4, 6.5) pousse le support (1) contre la surface de montage (M) avec une composante de force (K2) au moyen de l'élément exerçant une force (10, 10.1, 10.3, 10.4, 10.5), et contre une surface de butée (A) s'étendant perpendiculairement à la surface de montage (M) avec une deuxième composante de force (K1), **caractérisé en ce que**
- un corps de butée (8, 8.1, 8.2, 8.3, 8.4, 8.5) est fixé par complémentarité de forme et sans jeu dans une admission (9, 9.2, 9.3, 9.5) sur le premier objet ;
- la surface de butée (A) est formée par le corps de butée (8, 8.1, 8.2, 8.3, 8.4, 8.5) et le support (1) bute directement contre la surface de butée (A) du corps de butée (8, 8.1, 8.2, 8.3, 8.4, 8.5), et
- la patte de serrage (6, 6.1, 6.2, 6.3, 6.4, 6.5) est mise en contact avec le support (1) et pousse celui-ci contre la surface de butée du corps de butée (8, 8.1, 8.2, 8.3, 8.4, 8.5).

10. Procédé selon la revendication 9, **caractérisé en ce que** la fixation du corps de butée (8, 8.1, 8.2, 8.3, 8.4, 8.5) par enfoncement du corps de butée (8, 8.1, 8.2, 8.3, 8.4, 8.5) dans un trou d'ajustage (9, 9.2, 9.3, 9.5) dans le premier objet (7).

11. Procédé selon la revendication 9 ou 10, **caractérisé en ce que** la patte de serrage (6, 6.1, 6.2, 6.3, 6.4, 6.5) est guidée sur le et le long du corps de butée (8, 8.1, 8.2, 8.3, 8.4, 8.5).

12. Dispositif de mesure de longueur avec un support (1) d'une mesure matérialisée (3), et avec un dispositif selon l'une des revendications précédentes 1 à 7 pour la fixation du support (1) sur une surface de montage (M) d'un objet à mesurer (7).
